Europäisches Patentamt

European Patent Office

Office européen des brevets

(19)

(11) Numéro de publication: **0 089 284**
**B1**

(12) **FASCICULE DE BREVET EUROPEEN**

(45) Date de publication du fascicule du brevet:
**28.01.87**

(51) Int. Cl.⁴: **G 01 S 13/20**, G 01 S 13/24

(21) Numéro de dépôt: **83400499.6**

(22) Date de dépôt: **11.03.83**

(54) **Procédé de lever d'ambiguïté de mesure de distance, et radar utilisant ce procédé.**

(30) Priorité: **12.03.82 FR 8204223**

(43) Date de publication de la demande:
**21.09.83 Bulletin 83/38**

(45) Mention de la délivrance du brevet:
**28.01.87 Bulletin 87/5**

(84) Etats contractants désignés:
**DE GB IT NL**

(56) Documents cités:
**FR - A - 2 412 852**
**US - A - 4 214 240**

**TECHNICAL NOTES, TN no. 900, 20 décembre 1971,**
**pages 1-7, RCA, Princeton, USA H. URKOWITZ: "Block**
**frequency diversity radar technique"**

(73) Titulaire: **THOMSON-CSF, 173, Boulevard Haussmann,**
**F-75379 Paris Cedex 08 (FR)**

(72) Inventeur: **Sarfati, Pierre, THOMSON-CSF SCPI 173, bld**
**Haussmann, F-75379 Paris Cedex 08 (FR)**

(74) Mandataire: **Benoit, Monique et al, THOMSON-CSF**
**SCPI 19, avenue de Messine, F-75008 Paris (FR)**

## Description

La présente invention concerne les systèmes de détection et de mesure de distance utilisant un radar.

Dans ces systèmes, le radar émet périodiquement, durant des intervalles de temps de courte durée, une onde électromagnétique à une fréquence d'émission se situant dans une bande hyperfréquence. Les impulsions ainsi émises se propagent dans l'atmosphère, sont éventuellement réfléchies par une cible, et sont reçues à nouveau par le radar après une durée qui dépend de la distance du radar à la cible. La mesure de cette durée donne une indication précise sur la distance du radar à la cible. De plus, pour les radars Doppler, le décalage entre la fréquence de l'onde électromagnétique de l'impulsion émise et la fréquence de l'onde électromagnétique de l'impulsion reçue après réflexion sur une cible donne une indication de la composante de vitesse de déplacement de la cible vers le radar.

Les impulsions sont émises périodiquement avec une fréquence de récurrence $F_r$ (période $T_r$). Pour un radar de surveillance dont l'antenne tourne en balayant l'espace à surveiller, une donnée à prendre en considération est le nombre N de coups au but, c'est-à-dire le nombre N d'impulsions émises et susceptibles d'être réfléchies par une cible avant que la cible ne sorte du champ du radar du fait de la rotation de celui-ci. Le nombre N dépend de la directivité de l'antenne et de la fréquence de récurrence des impulsions, mais il constitue un paramètre qui peut être bien connu pour un système donné.

Si une cible suffisamment éloignée du radar reçoit une impulsion, l'écho renvoyé peut n'être reçu par l'antenne du radar qu'après qu'une deuxième impulsion a été émise (séparée de la première par la période de récurrence $T_r$). Dans ce cas, le système radar ne sait pas a priori si l'écho reçu provient de la deuxième impulsion réfléchie par une cible proche ou de la première impulsion réfléchie par une cible beaucoup plus lointaine.

Plus généralement, si une cible est à une distance inférieure à $cT_r/2$ (c étant la vitesse de propagation des ondes électromagnétiques émises), le radar recevra un écho d'une impulsion au cours de la période de récurrence $T_r$ qui suit immédiatement l'émission de l'impulsion; on dira qu'il s'agit d'un écho de première récurrence ou de première trace.

Si la cible est à une distance comprise entre $cT_r/2$ et $cT_r$, le radar recevra un écho au cours de la deuxième période de récurrence suivant l'émission de l'impulsion; il s'agira d'un écho de deuxième récurrence ou de deuxième trace.

Si la cible est à une distance comprise entre $(n-1)cT_r/2$ et $ncT_r/2$, le radar recevra un écho au cours de la $n^{ième}$ période suivant l'émission de l'impulsion; il s'agira d'un écho de $n^{ième}$ trace, la cible étant également appelée cible de $n^{ième}$ trace.

Les impulsions sont émises régulièrement par le radar et il est nécessaire de savoir avec certitude si un écho reçu est ou non une réflexion de l'impulsion qui précède immédiatement. Divers moyens ont donc déjà été proposés pour éliminer les échos qui ne sont pas de première trace.

Par exemple, une variation de la période de récurrence d'impulsion à impulsion fait que les échos de première trace issus d'une cible à une distance donnée restent fixes par rapport aux impulsions qui les précèdent immédiatement, tandis que les autres échos se déplacent. On peut donc éliminer les échos instables et ne garder que les échos stables correspondant à des cibles de première trace. De manière analogue, le document FR A 2 412 852 décrit un système émettant des impulsions par rafales (ou «blocs») de n impulsions, et dans lequel la période de récurrence varie d'une rafale à la suivante.

Un but de la présente invention est de permettre non seulement de distinguer les échos de première trace des autres échos, mais encore de repérer les échos correspondant spécifiquement aux deuxième, troisième trace, etc., et de classer ces échos au lieu de les éliminer pour déterminer la distance exacte des cibles jusqu'à une distance égale à plusieurs fois la distance d'ambiguïté $cT_r/2$ du radar.

Les solutions qui viendraient naturellement à l'esprit, pour augmenter la portée jusqu'à laquelle on connaît avec certitude la distance des cibles, serait de multiplier par 2, 3, 4, etc. . . la période de récurrence ou de la moduler selon le principe exposé au paragraphe précédent pour éliminer les échos autres que de première trace. Mais la première solution réduit la probabilité de détection d'une cible tandis que la seconde est mal adaptée à un radar doppler et difficile à mettre en oeuvre.

La présente invention propose un procédé de lever d'ambiguïté de mesure de distance qui permet, tout en conservant une période de récurrence donnée qui fixe la distance d'ambiguïté, d'éliminer les échos s'ils sont au-delà de la $n^{ième}$ trace, mais de conserver les échos jusqu'à la $n^{ième}$ trace et de classer ces échos dans leur trace respective pour en déduire la distance exacte de la cible qui a donné lieu à ces échos.

Le procédé selon l'invention tel que défini dans la revendication 1 utilise une émission des impulsions par rafales de n impulsions, n étant un nombre entier égal à quelques unités, et se base sur l'idée de changer la fréquence d'émission du radar (fréquence de l'onde hyperfréquence) d'une rafale à la suivante, la fréquence d'émission restant constante pour toutes les impulsions d'une rafale, à compter le nombre M d'impulsions reçues après réflexion sur une cible et, connaissant le nombre N de coups au but émis par le radar, à comparer le nombre M d'impulsions reçues essentiellement aux nombres N, $N(n-1)/n$, $N(n-2)/n, . . . N/n$.

Le résultat de la comparaison est alors transmis ou affiché pour définir la gamme de distance de la cible de la manière suivante: si M est compris entre $N(n-i+1)/n$ et $N(n-i)/n$, les échos reçus sont classés comme échos de $i^{ième}$ récurrence et

la cible est considérée comme étant à une distance du radar comprise entre $(i-1)cT_r/2$ et $icT_r/2$ où c est la vitesse de propagation des ondes et $T_r$ la période de récurrence des impulsions à l'intérieur d'une rafale de n impulsions.

La fréquence de récurrence n'a pas besoin d'être modulée, ni d'impulsion à impulsion, ni de rafale à rafale, ni de tour d'antenne à tour d'antenne.

L'invention s'explique de la manière suivante: si une rafale comprend n impulsions à la même fréquence d'émission F1, puis n autres impulsions à une autre fréquence d'émission F2, on peut regarder quelles sont les impulsions de fréquence F1 reçues après réflexion au cours de la durée $nT_r$ correspondant à la première rafale.

Si la cible est de première trace, un écho à fréquence F1 sera détecté après chaque impulsion émise à fréquence F1; n échos seront donc détectés. Aucun écho n'est ensuite détecté pendant la deuxième rafale car l'oscillateur local du radar est passé à la fréquence F2 et les échos à fréquence F1 ne sont plus détectés (il ne s'agit pas d'un radar doppler).

Si la cible est de seconde trace, il n'y aura pas d'échos après la première impulsion à F1, puis un écho suivra chaque impulsion à fréquence F1 jusqu'à ce que la fréquence de l'oscillateur local passe à F2. Par conséquent, $n-1$ impulsions seront reçues.

Si la cible est de $i^{ème}$ trace, $n-i+1$ impulsions seront reçues.

Si la cible est au-delà de la $n^{ème}$ trace, aucune impulsion ne sera reçue.

En pratique, ce n'est pas le nombre d'impulsions par rafale que l'on va compter selon l'invention, mais le nombre total d'impulsions reçues pendant que la cible est dans le champ du radar.

Si le radar émet N coups au but, le nombre de rafales de n impulsions émises pendant que la cible est dans le champ du radar est N/n.

Par conséquent, si la cible est de $i^{ème}$ trace, le nombre d'impulsions reçues d'une cible est théoriquement $N(n-i+1)/n$ (i variant de 1 à n) et il est nul pour i plus grand que n.

On comptera le nombre M d'impulsions reçues pour le comparer au nombre $N(n-i+1)/n$. La probabilité de détection n'étant pas toujours égale à 100%, on transmettra ou affichera un signal indiquant que la cible est de $i^{ème}$ trace si le nombre M d'impulsions reçues est compris entre $N(n-i+1)/n$ et $N(n-i)/n$.

Pour la $n^{ème}$ trace (i = n), on transmettra un signal de détection de cible de $n^{ème}$ trace si M est compris entre N/n et un nombre p plus petit que N/n, p représentant une marge de sécurité correspondant à un taux de fausse alarme éventuellement réglable. Si M est inférieur à p on ne transmettra pas de signal de détection de cible.

Un exemple numérique simple peut être donné: si N = 120 et si on cherche à éliminer les cibles au-delà de la quatrième trace (n = 4), on changera la fréquence d'émission toutes les 4 impulsions et on comptera le nombre M d'impulsions reçues; si M est compris entre 91 et 120 on transmettra alors un signal indiquant que les échos reçus sont de 1ère trace; si M est compris entre 61 et 90, il s'agira d'une 2ème trace; si M est compris entre 31 et 60, d'une 3ème trace et si M est compris entre p et 30, d'une 4ème trace. Les impulsions en nombre inférieur à p ne seront pas prises en compte pour définir la présence d'une cible.

Le séquencement d'émission, consistant à émettre une rafale de n impulsions à fréquence F1 et à changer la fréquence d'émission à chaque nouvelle rafale, peut se faire de plusieurs manières. La manière la plus simple consisterait à alterner des rafales à fréquence F1 et des rafales à fréquence F2. On peut aussi prévoir un cycle de rafales avec plus de deux fréquences, par exemple 4 ou plus.

Plus le nombre de fréquences cycliquement utilisées est grand, moins on risque que des cibles de trace élevée soient prises en compte et confondues avec des cibles de trace moins élevée: par exemple si on se contente d'alterner deux fréquences F1 et F2 avec des rafales de trois impulsions, les échos de quatrième trace ne seront pas éliminés et seront en nombre pratiquement égal aux échos de troisième trace.

On peut cependant changer de fréquence de récurrence, ce qui a d'ailleurs l'avantage de permettre de distinguer plusieurs cibles de traces différentes dont les échos seraient superposés avec une fréquence de récurrence fixe.

Le procédé de lever d'ambiguïté qui vient d'être décrit, avec émission à plusieurs fréquences successives, par rafales, puis comptage du nombre d'échos reçus et comparaison à des nombres connus, s'avère particulièrement efficace dans le cas de la voie surface des radars de veille marine, mais il est plus généralement applicable à tout radar de mesure (non doppler).

Il est d'autant plus efficace que les surfaces équivalentes de cible sont importantes, ce qui est particulièrement vrai dans le cas des radars de veille chargés de détecter les bâtiments de surface.

L'invention s'étend aussi au système radar défini dans la revendication 3.

La figure 1 montre la succession des impulsions émises avec leur fréquence d'émission respective pour une élimination des échos au-delà de la quatrième trace (n = 4). Chaque rafale comprend quatre imulsions à même fréquence d'émission. Le radar comprendra une commande de changement de fréquence, pilotée par une horloge de période nTr pour assurer ce changement toutes les n périodes de récurrence.

La figure 2 montre un exemple non limitatif de réalisation du système de lever d'ambiguïté distance permettant de reclasser les échos dans leur récurrence respective par le procédé selon l'invention.

De manière classique, le signal vidéo reçu par le radar est échantillonné de manière à décomposer la période de récurrence Tr du radar en un certain nombre de petits intervalles de temps appelés «cases distances»; si un écho apparaît dans une case distance donnée, il y a une correspondance directe entre le numéro de cette case distance dans la période de récurrence et la distance de la cible au radar. On utilise le plus souvent comme période d'échantillonnage (donc comme durée de chaque case distance) la largeur de l'impulsion émise par le radar au début de chaque période de récurrence.

Le signal vidéo issu de l'antenne radar est appliqué, après échantillonnage et démodulation, à l'entrée E d'un comparateur à seuil 10. Ce seuil peut être fixe ou asservi au niveau moyen de bruit du récepteur; il permet de régler le taux de fausse alarme.

Un écho est détecté seulement s'il y a dépassement du seuil, auquel cas le comparateur 10 fournit un signal logique de niveau haut, le niveau étant au contraire bas en l'absence de dépassement du seuil.

Les signaux logiques issus du comparateur sont dirigés vers l'entrée d'un registre à décalage 12 comportant au moins autant de cases qu'il y a de cases distances dans une période de récurrence Tr. Le décalage est commandé périodiquement par un signal d'horloge H1 dont la période est la période d'échantillonnage du signal vidéo. Le signal H1 est fourni par un circuit logique 14 fournissant divers signaux périodiques pour la commande du circuit de lever d'ambiguïté distance ainsi que de l'ensemble du radar.

Ainsi, à partir du début d'une période de récurrence, des signaux logiques de présence ou d'absence d'écho sont successivement introduites dans le registre à décalage 12 qui, au bout d'une période de récurrence Tr, se trouve rempli de 0 ou 1 indiquant l'absence ou la présence de cibles aux distances correspondant aux différentes cases distances.

Pour éliminer l'ambiguïté de distance, on cherche, comme on l'a expliqué, à compter le nombre d'échos reçus d'une cible pendant que le radar émet N coups au but. Pour une cible donnée, il s'agira bien entendu de compter le nombre d'échos reçus à la même position donc dans une case distance donnée: si un écho est reçu dans la $j^{ième}$ case distance, il faudra, pour lever l'ambiguïté distance selon le procédé de l'invention, compter le nombre d'échos reçus (pendant les N émissions du radar) dans la $j^{ième}$ case distance: le cumul des dépassements de seuil pendant les récurrences successives devra être fait dans chaque case distance.

Un sommateur 16 est intercalé entre la sortie du comparateur 10 et l'entrée du registre 12. Ce sommateur reçoit donc, d'une part, la sortie du comparateur 10 et, d'autre part, à travers une porte ET 18 qui peut être inhibée pendant une période Tr toutes les N périodes Tr, la sortie du registre 12.

De cette manière, on introduit dans le registre, lors de la récurrence k, la somme du signal reçu (dépassement de seuil ou non) dans la case distance j et des signaux précédemment reçus dans la même case.

Bien entendu, le registre devra être capable de stocker à chaque case un nombre de plusieurs bits; il peut s'agir de plusieurs registres en parallèle actionnés en synchronisme par le signal H1.

Après le cumul sur N récurrences successives, le registre 12 comprendra, pour chaque case distance, un nombre représentant le nombre de dépassements de seuil pendant ces N récurrences.

Après ces N récurrences, on arrête le cumul pendant une période de récurrence; un signal H2, issu du circuit logique 14 et comprenant un créneau de durée (N−1)Tr se renouvelant périodiquement avec une période NTr, bloque la porte ET 18 pendant la première période Tr d'une série de N et la rouvre pendant les N−1 périodes suivantes. Pendant la première période, le registre se remplit donc à nouveau sans cumul, tandis que les nombres précédemment cumulés sont évacués du registre vers un ensemble de traitement de lever d'ambiguïté distance et de reclassement des échos dans leur récurrence respective.

La transmission de ces nombres cumulés se fait en ouvrant, par le complément du signal H2 donc pendant la première période Tr, une porte ET 20 connectée en sortie du registre.

Bien entendu, on a figuré sur le dessin une porte ET à deux entrées, mais, comme il s'agit de transmettre pour chaque case distance un nombre de plusieurs bits, la porte ET 20 est en réalité constituée par un ensemble de portes ET ouvertes simultanément par le complément du signal H2 et laissant passer chacune un bit du nombre à transmettre.

Les nombres cumulés transmis successivement, case distance par case distance, en synchronisme avec l'échantillonnage du signal vidéo, sont comparés en parallèle dans plusieurs comparateurs doubles dont la fonction est de comparer le nombre reçu avec des nombres N(n−i)/n, où n est le rang de la récurrence au-delà de laquelle on veut éliminer les échos. On rappelle que le radar change de fréquence d'émission toutes les n impulsions et c'est pourquoi on a prévu une sortie du circuit logique 14 pour fournir un signal de période nTr pour commander le changement de fréquence d'émission radar. Ce signal peut servir à l'adressage séquentiel d'une mémoire morte programmable 22 capable de transmettre diverses valeurs de fréquence radar F1, F2, etc. au circuit d'émission du radar (non représenté).

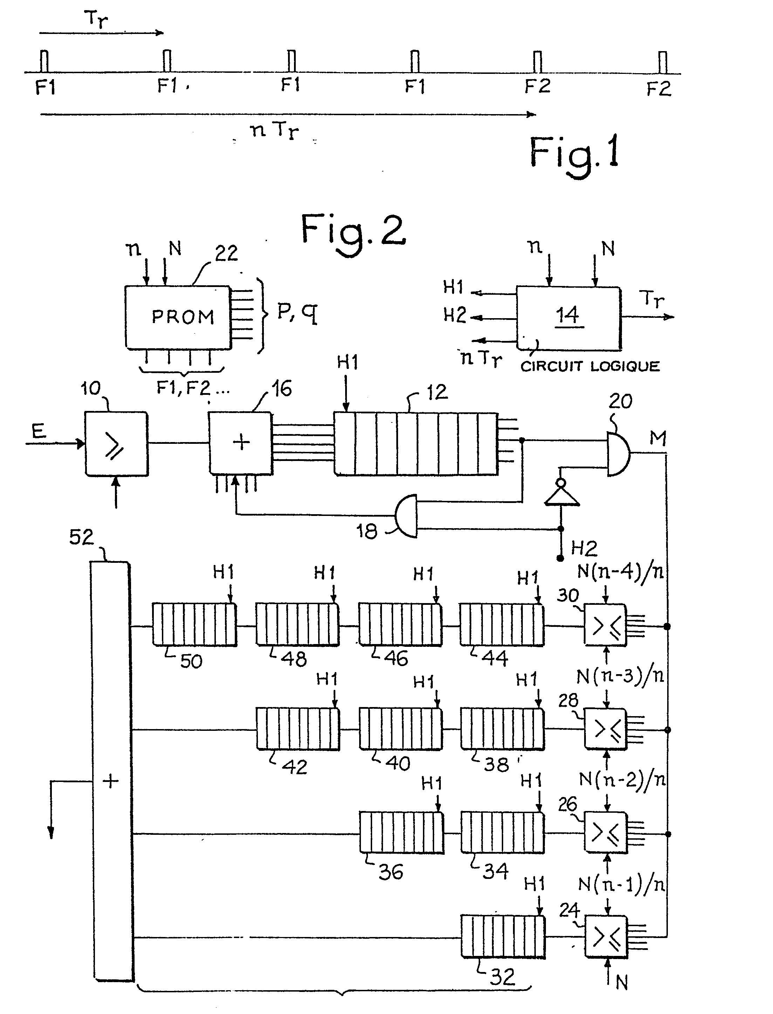

La mémoire morte 22, de préférence programmable, contient également les valeurs des nombres N(n−i)/n désignés généralement par les lettres p, q sur la figure 2. En fonction des nombres n et N servant à l'adressage de la mémoire morte, des nombres p, q sont fournis à la sortie de celle-ci et transmis aux comparateurs doubles qui reçoivent les nombres d'échos cumulés à comparer aux nombres N(n−i)/n.

Dans l'exemple représenté, on a prévu quatre comparateurs doubles comparant le nombre M d'échos reçus et cumulés dans une case distance respectivement à des nombres
N et N(n−1)/n pour un comparateur 24,
N(n−1)/n et N(n−2)/n pour un comparateur 26,
N(n−2)/n et N(n−3)/n pour un comparateur 28,
N(n−3)/n et N(n−4)/n pour un comparateur 30.

Il y a autant de comparateurs doubles que de récurrences dans lesquelles on veut obtenir les échos.

Le dernier comparateur peut en réalité comparer le nombre reçu à un nombre qui n'est pas zéro mais qui peut être un nombre p choisi en fonction d'un réglage de taux de fausse alarme dont il faut tenir compte.

Ainsi, en sortie des comparateurs, à un instant d'échantillonnage donné, donc pour une case distance donnée, on trouve un signal indiquant dans quelle fourchette $N(n-i+1)/n$ , $N(n-i)/n$ se trouve le nombre d'échos reçus. Le comparateur correspondant à cette fourchette délivre un signal particulier et la présence de ce signal en sortie du comparateur de rang i est caractéristique de la présence d'un écho de $i^{ème}$ récurrence.

On prévoit de plus que les échos ainsi détectés sont reclassés à la suite les uns des autres dans leur récurrence respective avant de les retransmettre vers un dispositif d'exploitation (calculateur ou indicateur panoramique). C'est ainsi qu'un écho de $i^{ème}$ trace présent dans une case distance donnée devra apparaître avec un retard de $(i-1)$ Tr par rapport à un écho de première trace qui serait présent dans la même case distance.

Pour cela, on retarde différemment les signaux de présence écho selon le comparateur dont ils sont issus. Des registres à décalage peuvent servir à effectuer ce retard tout en stockant les signaux de présence écho sur toute la durée d'une récurrence.

Ces registres sont actionnés en synchronisme par le signal d'horloge H1. Ils ont le même nombre de cases que le registre 12.

Ainsi, pour les échos de première trace, un registre à décalage 32 est placé en sortie du comparateur 24. On y trouve tous les échos de première récurrence reçus après N coups au but émis par le radar.

En sortie du comparateur 26, sont placés en cascade deux registres à décalage 34 et 36, le deuxième jouant le rôle de ligne à retard introduisant un retard Tr; on y trouve les échos de deuxième trace, mais ils n'arrivent qu'après la transmission des échos présents dans le registre 32.

De même, les échos de troisième trace passent à travers trois registres 38, 40, 42 en série après le comparateur 28, et les échos de quatrième trace passent à travers quatre registres 44, 46, 48, 50 en sortie du comparateur 30.

Les sorties de ces quatre lignes de registres sont connectées à un sommateur 52 qui les transmet vers un calculateur ou un indicateur panoramique qui les traite.

Lorsqu'on veut limiter le nombre de récurrences dans lesquelles on cherche des échos, il faut prévoir que les comparateurs et les registres à décalage inutilisés sont inhibés. Cette inhibition peut se faire sous la commande de la mémoire PROM 22 à laquelle un opérateur indique le nombre n de récurrences intéressantes.

La description qui précède n'est pas limitative et on peut d'ailleurs imaginer que les fonctions de calcul et comparaison de nombres, ainsi que le reclassement des échos dans les récurrences respectives, soient faits par un calculateur ou microcalculateur programmé.

Si on change la période de récurrence au cours de la rotation de l'antenne, on peut soit garder le même nombre de cases distances, soit le changer mais il faut que les registres à décalage comportent au moins autant de cases que le maximum de cases distances que l'on risque d'avoir.

**Revendications**

1. Procédé pour lever l'ambiguïté de mesure de distance dans un système de mesure utilisant un radar émettant dans une bande hyperfréquence par impulsions de courte durée se répétant avec une période de récurrence $T_r$, les nombres des impulsions respectivement émises et reçues pendant le passage du radar devant une cible étant N et M, avec $M \leqslant N$, les impulsions étant émises par rafales de n impulsions, n étant un nombre entier égal à quelques unités, caractérisé par le fait que la fréquence d'émission et réception du radar est changée d'une rafale à la suivante, que les impulsions reçues après réflexion sur une cible sont comptées et que le nombre M d'impulsions ainsi reçues est comparé aux nombres N, $N(n-1)/n$, $N(n-2)/n$, ..., $N(n-i)/n$, ..., $N/n$, le résultat de la comparaison étant transmis ou affiché pour définir la gamme de distances de la cible, de la manière suivante: si M est compris entre $N(n-i+1)/n$ et $N(n-i)/n$, les impulsions reçues sont des impulsions de ième récurrence, donc la cible est à une distance du radar comprise entre $(i-1)cT_r/2$ et $icT_r/2$, où c est la vitesse de propagation des ondes électromagnétiques.

2. Procédé selon la revendication 1, caractérisé par le fait que si M est compris entre 0 et un nombre p fixé, plus petit que $N/n$, aucun signal indiquant la présence d'une cible dans la distance $ncT_r/2$ n'est transmis.

3. Système radar comprenant des moyens d'émission émettant, pendant le passage du système radar devant une cible, un nombre N d'impulsions par rafales de n impulsions ayant une période de récurrence $T_r$, n étant un nombre entier égal à quelques unités, et des moyens de réception détectant les impulsions réfléchies par la cible, caractérisé par le fait qu'il comporte des moyens (22) pour changer la fréquence d'émission et réception à chaque nouvelle rafale, des moyens de comptage (12, 16) du nombre M des impulsions reçues après réflexion sur une cible, et des moyens de comparaison (24, 26, 28, 30) du nombre M d'impulsions reçues à des nombres prédéterminés qui sont N, $N(n-1)/n$, ..., $N(n-i)/n$, ..., $N/n$, le résultat de la comparaison étant transmis ou affiché pour définir la gamme de distances de la cible, de la manière suivante: si M est compris entre $N(n-i+1)/n$ et $N(n-i)/n$, les impulsions reçues sont des impulsions de $i^{ème}$ récurrence, dont la cible est à une distance du radar comprise entre $(i-1)cT_r/2$ et $icT_r/2$, où c est la vitesse de propagation des ondes électromagnétiques.

4. Système radar selon la revendication 3, caractérisé par le fait que les moyens de comptage comprennent un registre à décalage (12) avec autant de cases qu'il y a de cases-distance dans une période de récurrence du radar, le registre étant actionné à une fréquence d'échantillonnage correspondant à la division de la période de récurrence en cases-distance, et un sommateur (16) additionnant la sortie du registre et les échos reçus dans les cases distances correspondantes des périodes de récurrence successives, la sortie du sommateur (16) étant reliée à l'entrée du registre (12) et le registre étant déchargé en vue de l'affichage au bout de N périodes de récurrence pour comparer les nombres d'échos cumulés dans les différentes cases du registre avec les nombres prédéterminés.

**Claims**

1. Method for the elimination of distance measurement ambiguity in a measurement system using a radar transmitting in a hyperfrequency band pulses of short duration repeated with a recurrence period $T_r$, the numbers of pulses respectively transmitted and received during the passage of the radar in front of a target being N and M, respectively, with $M \leqslant N$, the pulses being transmitted in bursts of n pulses, n being an integer number equal to some units, characterized by the fact that the transmission and reception frequency of the radar is changed from one burst to the following, that the pulses received after reflection on a target are counted and that the number M of thus received pulses is compared to the numbers N, $N(n-1)/n$, $N(n-2)/n$, ..., $N(n-i)/n$, ..., N/n, the result of the comparison being transmitted or displayed to define the range of target distances in the following manner: If M is comprised between $N(n-i+1)/n$ and $N(n-i)/n$, the received pulses are pulses of the ith recurrence, and the target is thus at a distance from the radar comprised between $(i-1)cT_2/2$ and $icT_r/2$, wherein c is the propagation speed of the electromagnetic waves.

2. Method according to claim 1, characterized by the fact that, if M is comprised between zero and a fixed number p, smaller than N/n, no signal indicating the presence of a target at the distance $ncT_r/2$ is transmitted.

3. Radar system comprising transmission means transmitting, during the passage of the radar system in front of a target, a number N of pulses in bursts of n pulses having a recurrence period $T_r$, n being an integer number equal to some units, and reception means detecting the pulses reflected by the target, characterized by the fact that it comprises means (22) for changing the transmission and reception frequency at each next burst, means (12, 16) for counting the number M of pulses received after reflection on the target, and means (24, 26, 28, 30) for comparing the number M of received pulses with predetermined numbers which are N, $N(n-1)/n$, ..., $N(n-i)/n$, ..., N/n, the result of the comparison being transmitted or displayed to define the range of target distances in the following manner: If M is comprised between $N(n-i+1)/n$ and $N(n-i)/n$, the received pulses are pulses of the ith recurrence, and the target is thus at a distance from the radar comprised between $(i-1)cT_r/2$ and $icT_r/2$, wherein c is the propagation speed of the electromagnetic waves.

4. Radar system according to claim 3, characterized by the fact that the counting means comprise a shift register (12) having as many stages as there are distance slots in a recurrence period of the radar, the register being actuated at a sampling frequency corresponding to the division of the recurrence period into distance slots, and a summer (16) adding the output of the register to the echoes received in the corresponding distance slots of the successive recurrence periods, the output of the summer (16) being connected to the input of the register (12) and the register being discharged in view of the display at the end of N recurrence periods, to compare the numbers of accumulated echoes in the different stages of the register to the predetermined numbers.

**Patentansprüche**

1. Verfahren zur Behebung der Mehrdeutigkeit der Entfernungsmessung in einem Messsystem, in welchem ein Radar verwendet wird, welches in einem Mikrowellenband Impulse kurzer Dauer aussendet, welche mit einer Wiederholungsperiode $T_r$ wiederholt werden, wobei die Anzahl der während der Vorbeibewegung des Radars vor einem Ziel gesendeten bzw. empfangenen Impulse N bzw. M ist, mit $M \leqslant N$, wobei ferner die Impulse in Salven von n Impulsen ausgesendet werden, worin n eine ganze Zahl ist, die einige Einheiten beträgt, dadurch gekennzeichnet, dass die Sende- und Empfangsfrequenz des Radars von einer Salve zur nächsten verändert wird, dass die nach Reflexion am Ziel empfangenen Impulse gezählt werden und die Anzahl M von so empfangenen Impulsen verglichen wird mit den Zahlen N, $N(n-1)/n$, $N(n-2)/n$, ..., $N(n-i)/n$, ..., N/n, wobei das Ergebnis dieses Vergleichs übertragen oder angezeigt wird, um den Entfernungsbereich des Ziels in folgender Weise zu definieren: Wenn M zwischen $N(n-i+1)/n$ und $N(n-i)/n$ liegt, so sind die empfangenen Impulse solche aus der i-ten Wiederholungsfolge, so dass sich das Ziel in einer Entfernung vom Radar befindet, welche zwischen $(i-1)cT_r/2$ und $icT_r/2$ liegt, worin c die Ausbreitungsgeschwindigkeit der elektromagnetischen Wellen ist.

2. Verfahren nach Anspruch 1, dadurch gekennzeichnet, dass , für M zwischen 0 und einer festen Zahl p, die kleiner als N/n ist, keinerlei Signal übertragen wird, welches die Anwesenheit eines Zieles in der Entfernung $ncT_r/2$ anzeigt.

3. Radarsystem mit einer Sendeeinrichtung, welche während der Vorbeibewegung des Radarsystems vor einem Ziel eine Anzahl N von Impulsen in Salven von n Impulsen aussendet, deren

Wiederholungsperiode $T_r$ ist, wobei n eine ganze Zahl ist, die gleich einigen Einheiten ist, und einer Empfangseinrichtung, welche die von dem Ziel reflektierten Impulse erfasst, dadurch gekennzeichnet, dass es Mittel (22) umfasst, um die Sende- und Empfangsfrequenz bei jeder neuen Salve zu verändern, Mittel (12, 16) zum Zählen der Anzahl M von nach Reflexion am Ziel empfangenen Impulsen sowie Mittel (24, 26, 28, 30) zum Vergleichen der Anzahl M von empfangenen Impulsen mit vorbestimmten Zahlen enthält, welche die folgenden sind: N, N(n − 1)/n, . . ., N(n − i)/n, . . ., N/n, wobei das Ergebnis des Vergleichs übertragen oder angezeigt wird, um den Entfernungsbereich des Ziels in folgender Weise zu definieren: Wenn M zwischen N(n − i + 1)/n und N(n − i)/n liegt, sind die empfangenen Impulse solche der i-ten Wiederholungsfolge, so dass sich das Ziel in einer Entfernung von dem Radar befindet, die zwischen $(i − 1)cT_r/2$ und $icT_r/2$ liegt, worin c die Ausbreitungsgeschwindigkeit der elektromagnetischen Wellen ist.

4. Radarsystem nach Anspruch 3, dadurch gekennzeichnet, dass die Zählmittel ein Schieberegister (12) mit ebensovielen Stufen enthält, wie Entfernungsfenster in einer Folgeperiode des Radars enthalten sind, wobei das Register mit einer Abtastfrequenz angesteuert wird, welche der Unterteilung der Wiederholungsperiode in Entfernungsfenster entspricht, und einen Summierer (16) enthalten, welcher das Ausgangssignal des Registers zu den Echos addiert, welche in den entsprechenden Entfernungsfenstern der aufeinanderfolgenden Wiederholungsperioden empfangen werden, wobei der Ausgang des Summierers (16) mit dem Eingang des Registers (12) verbunden ist und das Register entladen wird im Hinblick auf die Anzeige am Ende von N Wiederholungsperioden, um die kumulierte Anzahl von Echos in den verschiedenen Stufen des Registers mit den vorbestimmten Zahlen zu vergleichen.

0 089 284

Fig.1

Fig.2

9